# EUROPEAN PATENT APPLICATION

(11) **EP 4 465 718 A1**
(43) Date of publication of application: **20.11.2024**
(21) Application number: 22917939.5
(22) Date of filing: 10.01.2022
(51) Int. Cl.: H04W 72/04

(54) **METHOD AND APPARATUS FOR DETERMINING CHANNEL ACCESS MODE, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/071108
(87) International publication number: WO 2023/130469

(57) **Abstract**

Provided in the present disclosure are a method and apparatus for determining a channel access mode, and a readable storage medium, which are applied to wireless communication technology. The method comprises: receiving, from a network device, at least two pieces of configuration information which carry channel access modes; determining first configuration information among the at least two pieces of configuration information on the basis of the at least two pieces of configuration information; and determining that a channel access mode of a user equipment is a channel access mode carried by the first configuration information. In the present disclosure, the user equipment receives a plurality of pieces of configuration information which carry channel access modes, selects a piece of configuration information among the plurality of pieces of configuration information on the basis of the plurality of pieces of configuration information, and determines that a channel access mode of the user equipment is a channel access mode carried by the selected configuration information, such that after receiving a plurality of channel access modes indicated by the network device, the user equipment determines a rational channel access mode from among the channel access modes, thereby saving on the power consumption of the user equipment on the basis of ensuring that the communication efficiency is improved.

## Description

### TECHNICAL FIELD

The present disclosure relates to a field of wireless communication technologies, and in particular relates to a method and an apparatus for determining a channel access mode, and a readable storage medium.

### BACKGROUND

In wireless communication technology, for example, in a 5th generation mobile communication technology (5G for short), on an unlicensed spectrum, a transmitting end generally needs to monitor a channel before occupying the channel to send data, that is, performing a clear channel assessment (CCA). After the transmitting end performs the clear channel assessment, if it determines that the channel is idle, it can occupy the channel to send and receive data. A maximum channel occupy time (MCOT) is stipulated by a protocol or configured/indicated by a base station; if it is determined that the channel is already occupied, the channel cannot be occupied. This process is generally referred to as a channel access mechanism of listen before talk (LBT) on an unlicensed frequency band. The LBT can also be divided into different types according to specific channel access parameters.

On the unlicensed spectrum, a LBT-free channel access mode can also be used, that is, the transmitting end can directly occupy the channel without channel monitoring.

A network device can use different methods to indicate a channel access mode adopted by a UE. When the network device indicates multiple channel access modes, how the UE determines the channel access mode is a problem that needs to be solved.

### SUMMARY

In view of this, the present disclosure provides a method, an apparatus for determining a channel access mode, and a readable storage medium.

In a first aspect, there is provided a method for determining a channel access mode. The method is performed by a user equipment, and includes:
receiving at least two pieces of configuration information carrying channel access modes from a network device;
determining first configuration information in the at least two pieces of configuration information based on the at least two pieces of configuration information; and
determining that a channel access mode of the user equipment is a channel access mode carried in the first configuration information.

In the method, when the user equipment receives the multiple pieces of configuration information carrying channel access modes, it selects a piece of configuration information among the multiple pieces of configuration information based on the multiple pieces of configuration information, and determines that the channel access mode of the user equipment is the channel access mode carried in the selected configuration information, so that when the user equipment receives the multiple channel access modes indicated by the network device, it can determine the reasonable channel access mode, and use the reasonable channel access mode for channel access, which saves the power consumption of the user equipment on the basis of ensuring saving and improving communication efficiency.

In some possible implementations, determining the first configuration information in the at least two pieces of configuration information based on the at least two pieces of configuration information includes: determining the first configuration information in the at least two pieces of configuration information based on priorities of the at least two pieces of configuration information.

In some possible implementations, determining the first configuration information in the at least two pieces of configuration information based on the priorities of the at least two pieces of configuration information includes: determining that configuration information with a highest priority in the at least two pieces of configuration information is the first configuration information.

In some possible implementations, determining the first configuration information in the at least two pieces of configuration information based on the at least two pieces of configuration information includes: in response to the at least two pieces of configuration information including second configuration information, determining that the second configuration information is the first configuration information.

In some possible implementations, determining the first configuration information in the at least two pieces of configuration information based on the at least two pieces of configuration information includes: in response to the at least two pieces of configuration information including downlink control information (DCI) carrying a channel access mode, determining that the DCI is the first configuration information.

In some possible implementations, determining the first configuration information in the at least two pieces of configuration information based on the at least two pieces of configuration information includes: in response to the at least two pieces of configuration information including third configuration information carrying a channel access mode different from a channel access mode carried by at least one piece of other configuration information, determining the first configuration information in the at least two pieces of configuration information based on configuration information other than the third configuration information in the at least two pieces of configuration information.

In some possible implementations, the third configuration information is configuration information with a lowest priority.

In some possible implementations, the third configuration information is system information carrying a channel access mode.

In some possible implementations, the at least two pieces of configuration information including system information and an RRC dedicated signaling, and in a case that a channel access mode carried in the system information is different from a channel access mode carried in the RRC dedicated signaling, the channel access mode carried in the system information is ignored.

In some possible implementations, the at least two pieces of configuration information include at least two of:
downlink control information (DCI) carrying a channel access mode,
an RRC dedicated signaling carrying a channel access mode, or
system information carrying a channel access mode.

In some possible implementations, the at least two pieces of configuration information include a DCI carrying a channel access mode and an RRC dedicated signaling carrying a channel access mode; and a priority of the DCI carrying the channel access mode is higher than a priority of the RRC dedicated signaling carrying the channel access mode.

In some possible implementations, the at least two pieces of configuration information include a DCI carrying a channel access mode and system information carrying a channel access mode; and a priority of the DCI carrying the channel access mode is higher than that of the system information carrying the channel access mode.

In some possible implementations, the at least two pieces of configuration information include an RRC dedicated signaling carrying a channel access mode and system information carrying a channel access mode; and a priority of the RRC dedicated signaling carrying the channel access mode is higher than that of the system information carrying the channel access mode.

In some possible implementations, the channel access mode includes at least one of:
a first type of channel access mode that performs N times of channel monitoring, where N is an integer greater than zero
a second type of channel access mode that only performs channel monitoring once, or
a third type of channel access mode without channel monitoring.

In a second aspect, there is provided a method for determining a channel access mode. The method is performed by a user equipment, and includes:
sending at least two pieces of configuration information carrying channel access modes to a user equipment; the at least two pieces of configuration information being configured to instruct the user equipment to determine first configuration information in the at least two pieces of configuration information based on the at least two pieces of configuration information, and to determine that a channel access mode of the user equipment is a channel access mode carried in the first configuration information.

In some possible implementations, determining the first configuration information in the at least two pieces of configuration information based on the at least two pieces of configuration information includes: determining the first configuration information in the at least two pieces of configuration information based on priorities of the at least two pieces of configuration information.

In some possible implementations, determining the first configuration information in the at least two pieces of configuration information based on the at least two pieces of configuration information includes: in response to the at least two pieces of configuration information including downlink control information (DCI) carrying a channel access mode, determining that the DCI is the first configuration information.

In some possible implementations, determining the first configuration information in the at least two pieces of configuration information based on the at least two pieces of configuration information includes: in response to the at least two pieces of configuration information including second configuration information, determining that the second configuration information is the first configuration information.

In some possible implementations, determining the first configuration information in the at least two pieces of configuration information based on the at least two pieces of configuration information includes: in response to the at least two pieces of configuration information including third configuration information carrying a channel access mode different from a channel access mode carried by at least one piece of other configuration information, determining the first configuration information in the at least two pieces of configuration information based on configuration information other than the third configuration information in the at least two pieces of configuration information.

In some possible implementations, determining the first configuration information in the at least two pieces of configuration information based on the at least two pieces of configuration information includes: the at least two pieces of configuration information including system information and an RRC dedicated signaling, and in a case that a channel access mode carried in the system information is different from a channel access mode carried in the RRC dedicated signaling, ignoring the channel access mode carried in the system information.

In a third aspect, there is provided a communication apparatus. The communication apparatus may be configured to perform the steps performed by the user equipment in the above first aspect or any possible design of the first aspect. The user equipment can implement each function in the above methods in the form of a hardware structure, a software module, or a hardware structure together with a software module.

When the communication apparatus described in the first aspect is implemented by a software module, the communication apparatus may include a transceiver module.

When performing the steps described in the first aspect above, the transceiver module is configured to receive at least two pieces of configuration information carrying channel access modes from a network device; and a processing module is configured to determine first configuration information in the at least two pieces of configuration information based on the at least two pieces of configuration information; and determine that a channel access mode of the user equipment is a channel access mode carried in the first configuration information.

In a fourth aspect, there is provided a communication apparatus. The communication apparatus may be configured to perform the steps executed by the network device in the above first aspect or any possible design of the first aspect. The network device can implement each function in the above-mentioned methods in the form of a hardware structure, a software module, or a hardware structure together with a software module.

When the communication apparatus described in the second aspect is implemented by a software module, the communication apparatus may include a transceiver module.

When performing the steps described in the second aspect above, the transceiver module is configured to send at least two pieces of configuration information carrying channel access modes to a user equipment; the at least two pieces of configuration information being configured to instruct the user equipment to determine first configuration information in the at least two pieces of configuration information based on the at least two pieces of configuration information, and to determine that a channel access mode of the user equipment is a channel access mode carried in the first configuration information.

In a fifth aspect, there is provided a communication apparatus, including a processor and a memory. The memory is configured to store a computer program; and the processor is configured to execute the computer program, so as to implement the first aspect or any possible design of the first aspect.

In a sixth aspect, there is provided a communication apparatus, including a processor and a memory. The memory is configured to store a computer program; and the processor is configured to execute the computer program, so as to implement the second aspect or any possible design of the second aspect.

In a seventh aspect, there is provided a computer-readable storage medium. Instructions (or computer programs, programs) are stored in the computer-readable storage medium, and when the instructions are invoked and executed on a computer, the computer is caused to perform the above-mentioned first aspect or any possible design of the first aspect.

In an eighth aspect, there is provided a computer-readable storage medium. Instructions (or computer programs, programs) are stored in the computer-readable storage medium, and when the instructions are invoked and executed on a computer, the computer is caused to perform the above-mentioned second aspect or any possible design of the second aspect.

It is to be understood that both the foregoing general description and the following detailed description are exemplary and explanatory only and do not limit of the present disclosure.

### BRIEF DESCRIPTION OF THE DRAWINGS

The drawings described here are used to provide a further understanding of embodiments of the present disclosure, and constitute apart of the application. The schematic embodiments of the embodiments of the present disclosure and their descriptions are used to explain the embodiments of the present disclosure, and do not constitute an undue limitation to the embodiments of the present disclosure. In the accompanying drawings:

The accompanying drawings, which are incorporated in and constitute a part of the specification, illustrate embodiments consistent with embodiments of the disclosure, and together with the description serve to explain the principles of the embodiments of the disclosure.
FIG. 1 is a schematic diagram of a wireless communication system architecture provided by an embodiment of the present disclosure.
Fig. 2 is a flowchart showing a method for determining a channel access mode according to an exemplary embodiment.
Fig. 3 is a flowchart showing a method for determining a channel access mode according to an exemplary embodiment.
Fig. 4 is a flowchart showing a method for determining a channel access mode according to an exemplary embodiment.
Fig. 5 is a flowchart showing a method for determining a channel access mode according to an exemplary embodiment.
Fig. 6 is a flowchart showing a method for determining a channel access mode according to an exemplary embodiment.
Fig. 7 is a flowchart showing a method for determining a channel access mode according to an exemplary embodiment.
Fig. 8 is a flowchart showing a method for determining a channel access mode according to an exemplary embodiment.
Fig. 9 is a flowchart showing a method for determining a channel access mode according to an exemplary embodiment.
Fig. 10 is a flowchart showing a method for determining a channel access mode according to an exemplary embodiment.
Fig. 11 is a structural diagram of an apparatus for determining a channel access mode according to an exemplary embodiment.
Fig. 12 is a structural diagram of an apparatus for determining a channel access mode according to an exemplary embodiment.
Fig. 13 is a structural diagram of an apparatus for determining a channel access mode according to an exemplary embodiment.
Fig. 14 is a structural diagram of an apparatus for determining a channel access mode according to an exemplary embodiment.

### DETAILED DESCRIPTION

Embodiments of the present disclosure will now be further described in conjunction with the accompanying drawings and specific implementations.

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with aspects of the present disclosure as recited in the appended claims.

Terms used in the embodiments of the present disclosure are for the purpose of describing specific embodiments only, and are not intended to limit the embodiments of the present disclosure. As used in the examples of this disclosure and the appended claims, the singular forms "a" and "an" are also intended to include the plural unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the words "if' and "in case" as used herein may be interpreted as "when" or "in a case that" or "in response to determining that".

Embodiments of the present disclosure are described in detail below, examples of which are illustrated in the accompanying drawings, where like or similar reference numerals designate like or similar elements throughout. The embodiments described below by referring to the figures are exemplary and are intended to explain the present disclosure and should not be construed as limiting the present disclosure.

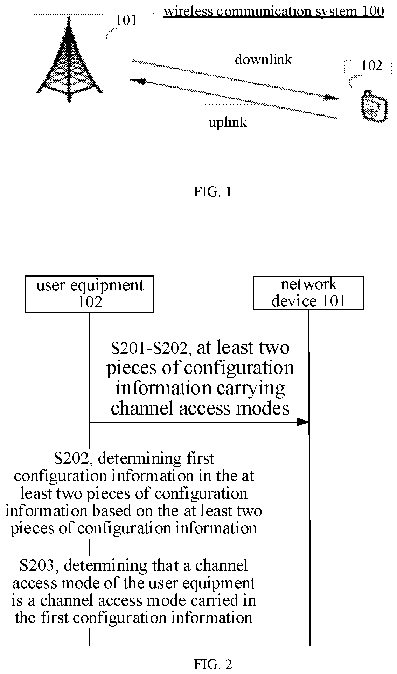

As shown in FIG. 1, a method for determining a channel access mode provided by an embodiment of the present disclosure may be applied to a wireless communication system 100. The wireless communication system may include but not limited to a network device 101 and a user equipment 102. The user equipment 102 is configured to support carrier aggregation, and the user equipment 102 may be connected to multiple carrier units of the network device 101, including a primary carrier unit and one or more secondary carrier units.

It should be understood that the above wireless communication system 100 may be applicable to both low-frequency scenarios and high-frequency scenarios. The application scenario of the wireless communication system 100 includes but is not limited to a long term evolution (LTE) system, a LTE frequency division duplex (FDD) system, a LTE time division duplex (TDD) system, a worldwide interoperability for micro wave access (WiMAX) communication system, a cloud radio access network (CRAN) system, a future 5th-generation (5G) system, a new radio (NR) communication system or a future evolved public land mobile network (PLMN) system, etc.

The user equipment 102 shown above may be a user equipment (UE), a terminal, an access terminal, a terminal unit, a terminal station, a mobile station (MS), a remote station, a remote terminal, a mobile terminal, a wireless communication equipment, a terminal agent or a user equipment, etc. The user equipment 102 may have a wireless transceiver function, which can communicate with one or more network devices 101 of one or more communication systems (such as wireless communication), and accept a network service provided by the network device 101, in which the network device 101 includes but is not limited to the illustrated base station.

The user equipment 102 may be a cellular phone, a cordless phone, a session initiation protocol (SIP) phone, a wireless local loop (WLL) station, a personal digital assistant (PDA) device, a handheld device with wireless communication functions, a computing device or other processing devices connected to wireless modems, a vehicle-mounted device, a wearable device, a user equipment in a future 5G network or a user equipment in a future evolved PLMN networks, etc.

The network device 101 may be an access network device (or called an access network site). The access network device refers to a device that provides a network access function, such as a radio access network (RAN) base station and the like. Specifically, the network device may include a base station (BS) device, or include a base station device and a radio resource management device for controlling the base station device, and the like. The network device may also include a relay station (relay device), an access point, and a base station in a future 5G network, a base station in a future evolved PLMN network or an NR base station, and the like. The network device may be a wearable device or in-vehicle device. The network device may also be a communication chip with a communication module.

For example, the network device 101 includes but is not limited to: a next-generation base station (gNB) in 5G, an evolved node B (eNB) or a radio network controller (RNC) in an LTE system, a node B (NB) in WCDMA system, a wireless controller or a base station controller (BSC) in a CRAN system, a base transceiver station (BTS), a home base station (for example, a home evolved nodeB, or a home node B, HNB), a baseband unit (BBU), a transmitting and receiving point (TRP), a transmitting point (TP) or a mobile switching center in a GSM system or CDMA system, etc.

An embodiment of the present disclosure provides a method for determining a channel access mode. FIG. 2 is a flowchart of a method for determining a channel access mode according to an exemplary embodiment. As shown in FIG. 2, the method includes the following steps.

In step S201, the network device 101 sends at least two pieces of configuration information carrying channel access modes to the user equipment 102.

In step S202, the user equipment 102 receives from the network equipment 101 the at least two pieces of configuration information carrying the channel access modes.

In step S203, the user equipment 102 determines first configuration information in the at least two pieces of configuration information based on the at least two pieces of configuration information.

In step S204, the user equipment 102 determines that a channel access mode of the user equipment is a channel access mode carried in the first configuration information.

In some possible implementations, the channel access mode includes at least one of the following types.

A first type of channel access mode, or called Type 1 channel access, corresponds to a channel access mode that performs N times of channel monitoring, in which N is an initial value generated by the UE according to the specification of the first type of channel access mode, and N is an integer greater than zero. The value of N may be 1 or a value of 1 or more.

A second type of channel access mode, or called Type 2 channel access, corresponds to a channel access mode that only performs channel monitoring once.

A third type of channel access mode, or called Type 3 channel access, corresponds to a channel access mode without channel monitoring. That is, the channel monitoring is not required, and the channel can be directly accessed.

In some possible implementations, determining the first configuration information in the at least two pieces of configuration information based on the at least two pieces of configuration information in step S203 includes: determining the first configuration information in the at least two pieces of configuration information based on priorities of the at least two pieces of configuration information.

In a possible example, it is determined that configuration information with a highest priority in the at least two pieces of configuration information is the first configuration information.

In some possible implementations, determining the first configuration information in the at least two pieces of configuration information based on the at least two pieces of configuration information in step S203 includes: in response to the at least two pieces of configuration information including second configuration information, determining that the second configuration information is the first configuration information.

In some possible implementations, determining the first configuration information in the at least two pieces of configuration information based on the at least two pieces of configuration information in step S203 includes: in response to the at least two pieces of configuration information including third configuration information, in which a channel access mode carried by the third configuration information is different from a channel access mode carried by at least one piece of other configuration information, determining the first configuration information in the at least two pieces of configuration information based on configuration information other than the third configuration information in the at least two pieces of configuration information.

In some possible implementations, the at least two pieces of configuration information include at least two of:
downlink control information (DCI) carrying a channel access mode,
an RRC dedicated signaling carrying a channel access mode, or
system information carrying a channel access mode.

In the embodiment of the present disclosure, when the user equipment receives the multiple pieces of configuration information carrying the channel access modes, it selects one piece of configuration information among the multiple pieces of configuration information based on the multiple pieces of configuration information, and determines that the channel access mode of the user equipment is a channel access mode carried in the selected configuration information, so that the user equipment can determine a reasonable channel access mode when receiving the multiple channel access modes indicated by the network device, and use the reasonable channel access mode for channel access, which saves power consumption of the user equipment on the basis of ensuring saving and improving communication efficiency.

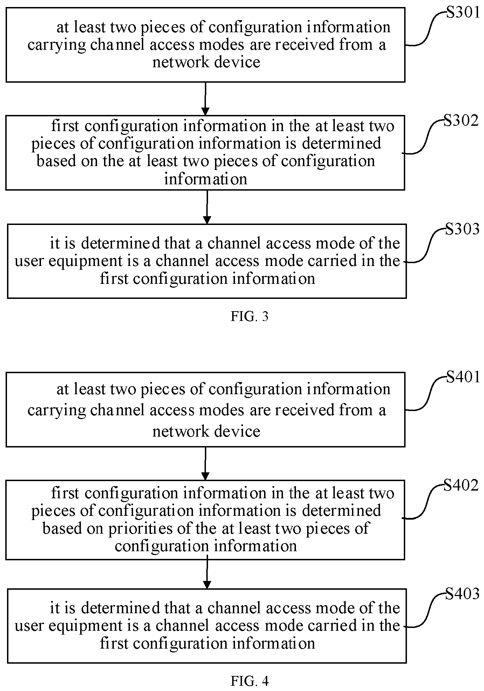

An embodiment of the present disclosure provides a method for determining a channel access mode, which is performed by a user equipment. FIG. 3 is a flowchart of a method for determining a channel access mode according to an exemplary embodiment. As shown in FIG. 3, the method includes the following steps.

In step S301, at least two pieces of configuration information carrying channel access modes are received from a network device.

In step S302, first configuration information in the at least two pieces of configuration information is determined based on the at least two pieces of configuration information.

In step S303, it is determined that a channel access mode of the user equipment is a channel access mode carried in the first configuration information.

In some possible implementations, the channel access mode includes at least one of the following types.

A first type of channel access mode, or called Type 1 channel access, corresponds to a channel access mode that performs N times of channel monitoring, in which N is an initial value generated by the UE according to the specification of the first type of channel access mode, and N is an integer greater than zero. The value of N may be 1 or a value of 1 or more.

A second type of channel access mode, or called Type 2 channel access, corresponds to a channel access mode that only performs channel monitoring once.

A third type of channel access mode, or called Type 3 channel access, corresponds to a channel access mode without channel monitoring. That is, the channel monitoring is not required, and the channel can be directly accessed.

In some possible implementations, determining the first configuration information in the at least two pieces of configuration information based on the at least two pieces of configuration information in step S302 includes: determining the first configuration information in the at least two pieces of configuration information based on priorities of the at least two pieces of configuration information.

In a possible example, it is determined that configuration information with a highest priority in the at least two pieces of configuration information is the first configuration information.

In some possible implementations, determining the first configuration information in the at least two pieces of configuration information based on the at least two pieces of configuration information in step S302 includes: in response to the at least two pieces of configuration information including second configuration information, determining that the second configuration information is the first configuration information.

In some possible implementations, determining the first configuration information in the at least two pieces of configuration information based on the at least two pieces of configuration information in step S302 includes: in response to the at least two pieces of configuration information including third configuration information, in which a channel access mode carried by the third configuration information is different from a channel access mode carried by at least one piece of other configuration information, determining the first configuration information in the at least two pieces of configuration information based on configuration information other than the third configuration information in the at least two pieces of configuration information.

In some possible implementations, the at least two pieces of configuration information include at least two of:
downlink control information (DCI) carrying a channel access mode,
an RRC dedicated signaling carrying a channel access mode, or
system information carrying a channel access mode.

In the embodiment of the present disclosure, when the user equipment receives the multiple pieces of configuration information carrying the channel access modes, it selects one piece of configuration information among the multiple pieces of configuration information based on the multiple pieces of configuration information, and determines that the channel access mode of the user equipment is a channel access mode carried in the selected configuration information, so that the user equipment can determine a reasonable channel access mode when receiving the multiple channel access modes indicated by the network device, and use the reasonable channel access mode for channel access, which saves power consumption of the user equipment on the basis of ensuring saving and improving communication efficiency.

An embodiment of the present disclosure provides a method for determining a channel access mode, which is performed by a user equipment. FIG. 4 is a flowchart of a method for determining a channel access mode according to an exemplary embodiment. As shown in FIG. 4, the method includes the following steps.

In step S401, at least two pieces of configuration information carrying channel access modes are received from a network device.

In step S402, first configuration information in the at least two pieces of configuration information is determined based on priorities of the at least two pieces of configuration information.

In step S403, it is determined that a channel access mode of the user equipment is a channel access mode carried in the first configuration information.

In some possible implementations, determining the first configuration information in the at least two pieces of configuration information based on the priorities of the at least two pieces of configuration information in step S402 includes: determining that configuration information with a highest priority in the at least two pieces of configuration information is the first configuration information.

In some possible implementations, determining the first configuration information in the at least two pieces of configuration information based on the priorities of the at least two pieces of configuration information in step S402 includes: determining that configuration information with a second highest priority in the at least two pieces of configuration information is the first configuration information.

In some possible implementations, the channel access mode includes at least one of the following types.

A first type of channel access mode, or called Type 1 channel access, corresponds to a channel access mode that performs N times of channel monitoring, in which N is an initial value generated by the UE according to the specification of the first type of channel access mode, and N is an integer greater than zero. The value of N may be 1 or a value of 1 or more.

A second type of channel access mode, or called Type 2 channel access, corresponds to a channel access mode that only performs channel monitoring once.

A third type of channel access mode, or called No-LBT, corresponds to a channel access mode without channel monitoring. That is, the channel monitoring is not required, and the channel can be directly accessed.

In some possible implementations, the at least two pieces of configuration information include at least two of:
downlink control information (DCI) carrying a channel access mode,
an RRC dedicated signaling carrying a channel access mode, or
system information carrying a channel access mode.

In some possible implementations, the above solution may also include default configuration information of the UE. The default configuration information may be configuration information with a lowest priority, and the default configuration information is used only when the UE does not receive the configuration information sent by the base station.

In some possible implementations, a priority of the DCI carrying the channel access mode is higher than a priority of the RRC dedicated signaling carrying the channel access mode.

In an example, the user equipment receives two configuration information carrying the channel access modes from the network device, which are respectively the DCI carrying the channel access mode and the RRC dedicated signaling carrying the channel access mode, and then determines that the DCI is the first configuration information, thereby determining that the channel access mode carried by the DCI is the channel access mode of the user equipment.

For example, the user equipment receives an RRC dedicated signaling carrying the second channel access mode (Type 2 channel access) and a DCI for scheduling a PUSCH carrying the third channel access mode (No-LBT) from the network device, and determines that the DCI is the first configuration information and determines that the third channel access mode (No-LBT) carried in the DCI is the channel access mode of the user equipment.

In some possible implementations, a priority of the DCI carrying the channel access mode is higher than that of the system information carrying the channel access mode.

In an example, the user equipment receives two configuration information carrying the channel access modes from the network device, which are respectively the DCI carrying the channel access mode and the system information carrying the channel access mode, and then determines that the DCI is the first configuration information, thereby determining the channel access mode carried in the DCI is the channel access mode of the user equipment.

For example, the user equipment receives broadcast system information carrying the third channel access mode (No-LBT) and a DCI for scheduling a PUSCH carrying the first channel access mode (Type 1 channel access) from the network device, and determines the DCI as the first configuration information, and determines that the first channel access mode (Type 1 channel access) carried in the DCI is the channel access mode of the user equipment.

In some possible implementations, a priority of the RRC dedicated signaling carrying the channel access mode is higher than that of the system information carrying the channel access mode.

In an example, the user equipment receives two configuration information carrying the channel access modes from the network device, which are respectively the RRC dedicated signaling carrying the channel access mode and the system information carrying the channel access mode, and then determines that the RRC dedicated signaling is the first configuration information, thereby determining that the channel access mode carried in the RRC dedicated signaling is the channel access mode of the user equipment.

For example, the user equipment receives system information carrying the first channel access mode (Type 1 channel access) and an RRC dedicated signaling carrying the third channel access mode (No-LBT) from the network device, and determines that the RRC dedicated signaling is the first configuration information and determines that the third channel access mode (No-LBT) carried in the RRC dedicated signaling is the channel access mode of the user equipment.

For example, the user equipment receives system information carrying a second channel access mode (Type 2 channel access) and an RRC dedicated signaling carrying a third channel access mode (No-LBT) from the network device, and determines that the RRC dedicated signaling is the first configuration information and determines that the third channel access mode (No-LBT) carried in the RRC dedicated signaling is the channel access mode of the user equipment.

In some possible implementations, a priority of the DCI carrying the channel access mode is higher than a priority of the RRC dedicated signaling carrying the channel access mode, and a priority of the RRC dedicated signaling carrying the channel access mode is higher than that of the system information carrying the channel access mode.

That is, an order of the priorities of the three configuration information from high to low is: the DCI carrying the channel access mode, the RRC dedicated signaling carrying the channel access mode, and the system information carrying the channel access mode.

In an example, the user equipment receives three configuration information carrying the channel access modes from the network device, which are respectively the DCI carrying the channel access mode, the RRC dedicated signaling carrying the channel access mode, and the system information carrying the channel access mode, and determines that the DCI is the first configuration information, thereby determining that the channel access mode carried in the DCI is the channel access mode of the user equipment.

For example, the user equipment receives a DCI for scheduling a PUSCH carrying the first channel access mode (Type 1 channel access), an RRC dedicated signaling carrying the second channel access mode (Type 2 channel access) and system information carrying the third channel access mode (No-LBT) from the network device, and determines that the DCI is the first configuration information, and determines that the first channel access mode (Type 1 channel access) carried in the DCI is the channel access mode of the user equipment.

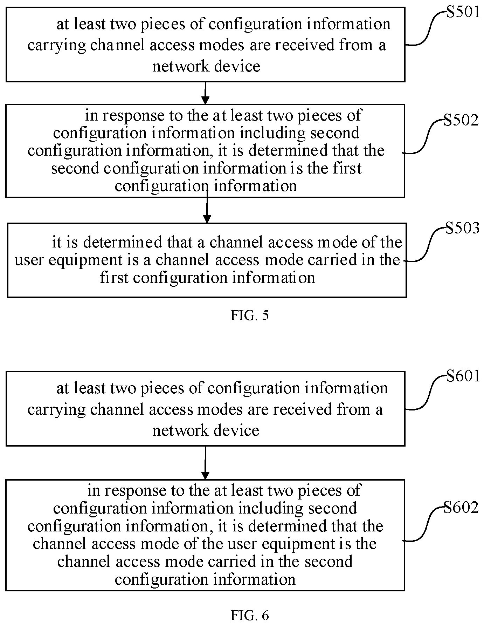

An embodiment of the present disclosure provides a method for determining a channel access mode, which is performed by a user equipment. FIG. 5 is a flowchart of a method for determining a channel access mode according to an exemplary embodiment. As shown in FIG. 5, the method includes the following steps.

In step S501, at least two pieces of configuration information carrying channel access modes are received from a network device.

In step S502, in response to the at least two pieces of configuration information including second configuration information, it is determined that the second configuration information is the first configuration information.

In step S503, it is determined that a channel access mode of the user equipment is a channel access mode carried in the first configuration information.

In the embodiment of the present disclosure, the second configuration information is set, and when the multiple pieces of configuration information received by the user equipment include the second configuration information, the second configuration information is used as reference information to determine that the second configuration information is the first configuration information, and to determine that the channel access mode of the user equipment is the channel access mode carried in the first configuration information.
or,
As shown in Figure 6, the method includes the following steps.

In step S601, at least two pieces of configuration information carrying channel access modes are received from a network device.

In step S602, in response to the at least two pieces of configuration information including second configuration information, it is determined that the channel access mode of the user equipment is the channel access mode carried in the second configuration information.

In the embodiment of the present disclosure, the second configuration information is set, and when the multiple pieces of configuration information received by the user equipment include the second configuration information, the second configuration information is used as reference information to determine that the channel access mode of the user equipment is the channel access mode carried in the second configuration information.

In some possible implementations, the at least two pieces of configuration information include at least two of:
downlink control information (DCI) carrying a channel access mode,
an RRC dedicated signaling carrying a channel access mode, or
system information carrying a channel access mode.

In some possible implementations, the second configuration information is preset configuration information. That is, which configuration information is the second configuration information is pre-configured for the UE; when the UE receives at least two pieces of configuration information, it can determine which configuration information is the second configuration information. In some other possible implementations, the second configuration information is configuration information determined by a protocol. That is, the UE can determine which configuration information is the second configuration information according to the communication protocol. When the UE receives at least two pieces of configuration information, it can determine which configuration information is the second configuration information. In some possible implementations, the second configuration information is configuration information with a highest priority.

In some possible implementations, the second configuration information is the configuration information with the highest priority among the downlink control information (DCI) carrying the channel access mode, the RRC dedicated signaling carrying the channel access mode, and the system information carrying the channel access mode. In some possible implementations, the above solution may also include default configuration information of the UE. The default configuration information may be the configuration information with the highest priority, and the default configuration information is used only when the UE does not receive the configuration information sent by the base station.

In some possible implementations, the second configuration information is the DCI carrying the channel access mode. Therefore, when the at least two pieces of configuration information include the DCI carrying the channel access mode, it is determined that the DCI carrying the channel access mode is the first configuration information, and it is determined that the channel access mode of the user equipment is the channel access mode carried in the DCI.

In some possible implementations, in response to the at least two pieces of configuration information including the downlink control information (DCI) carrying the channel access mode, it is determined that the DCI is the first configuration information, and it is determined that the channel access mode of the user equipment is the channel access mode carried in the DCI.

In some possible examples, the user equipment receives the DCI carrying the channel access mode and the RRC dedicated signaling carrying the channel access mode, and determines that the DCI carrying the channel access mode is the first configuration information, and determines that the channel access mode of the user equipment is the channel access mode carried in the DCI.

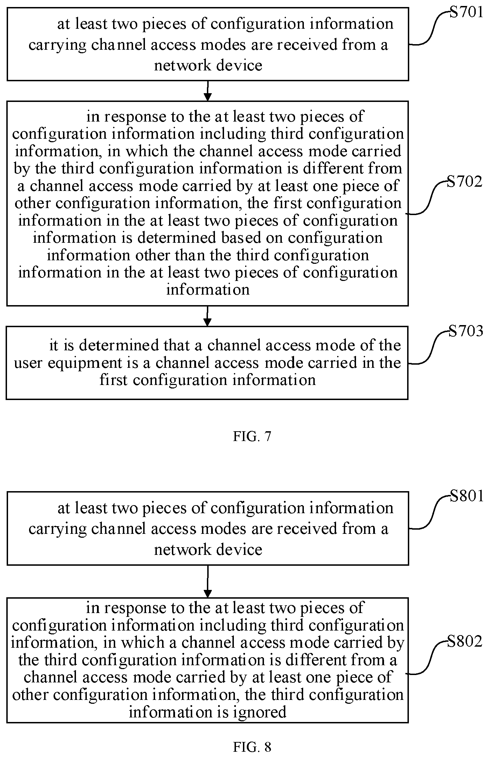

An embodiment of the present disclosure provides a method for determining a channel access mode, which is performed by a user equipment. FIG. 7 is a flowchart of a method for determining a channel access mode according to an exemplary embodiment. As shown in FIG. 7, the method includes the following steps.

In step S701, at least two pieces of configuration information carrying channel access modes are received from a network device.

In step S702, in response to the at least two pieces of configuration information including third configuration information, in which the channel access mode carried by the third configuration information is different from a channel access mode carried by at least one piece of other configuration information, the first configuration information in the at least two pieces of configuration information is determined based on configuration information other than the third configuration information in the at least two pieces of configuration information.

In step S703, it is determined that a channel access mode of the user equipment is a channel access mode carried in the first configuration information.

In some possible implementations, the at least two pieces of configuration information include at least two of:
downlink control information (DCI) carrying a channel access mode,
an RRC dedicated signaling carrying a channel access mode, or
system information carrying a channel access mode.

In some possible implementations, the third configuration information is preset configuration information. That is, which configuration information is the third configuration information is pre-configured for the UE. When the UE receives at least two pieces of configuration information, it can determine which configuration information is the third configuration information. In some other possible implementations, the third configuration information is configuration information determined by a protocol. That is, the UE can determine which configuration information is the third configuration information according to the communication protocol; and when the UE receives at least two pieces of configuration information, it can determine which configuration information is the third configuration information. In some possible implementations, the third configuration information is configuration information with a lowest priority. In some possible implementations, the above solution may further include default configuration information of the UE. The default configuration information may be configuration information with a lowest priority, and the default configuration information is used only when the UE does not receive the configuration information sent by the base station.

In some possible implementations, the third configuration information is configuration information with a lowest priority among the downlink control information DCI carrying the channel access mode, the RRC dedicated signaling carrying the channel access mode, and the system information carrying the channel access mode.

In some possible implementations, the third configuration information is the system information carrying the channel access mode. Therefore, when the at least two pieces of configuration information include the system information carrying the channel access mode, and the channel access mode carried in the system information is different from the channel access mode carried in at least one piece of other configuration information, the first configuration information in the at least two pieces of configuration information is determined based on configuration information other than the third configuration information in the at least two pieces of configuration information.

In some possible examples, the user equipment receives the DCI carrying the channel access mode and the system information carrying the channel access mode, the channel access mode carried in the DCI is different from the channel access mode carried in the system information, and the channel access mode carried in the system information is ignored. It is determined that the DCI is the first configuration information, and it is determined that the channel access mode of the user equipment is the channel access mode carried in the DCI.

In some possible examples, the user equipment receives the DCI carrying the channel access mode, the RRC dedicated signaling carrying the channel access mode, and the system information carrying the channel access mode, and the channel access mode carried in the DCI is different from the channel access mode carried in the system information, and the channel access mode carried in the system information is ignored. It is determined that the DCI or the RRC dedicated signaling is the first configuration information, and it is determined that the channel access mode of the user equipment is the channel access mode carried in the DCI.

In the embodiment of the present disclosure, the third configuration information is set, and when the third configuration information is included in the multiple pieces of configuration information received by the user equipment, the third configuration information is ignored, the first configuration information is determined based on configuration information other than the third configuration information in the multiple pieces of configuration information, and it is determined that the channel access mode of the user equipment is the channel access mode carried in the first configuration information.

An embodiment of the present disclosure provides a method for determining a channel access mode, which is performed by a user equipment. FIG. 8 is a flowchart of a method for determining a channel access mode according to an exemplary embodiment. As shown in FIG. 8, the method includes the following steps.

In step S801, at least two pieces of configuration information carrying channel access modes are received from a network device.

In step S802, in response to the at least two pieces of configuration information including third configuration information, in which a channel access mode carried by the third configuration information is different from a channel access mode carried by at least one piece of other configuration information, the third configuration information is ignored.

In some possible implementations, the at least two pieces of configuration information include at least two of:
downlink control information (DCI) carrying a channel access mode,
an RRC dedicated signaling carrying a channel access mode, or
system information carrying a channel access mode.

In some possible implementations, the third configuration information is preset configuration information. That is, which configuration information is the third configuration information is pre-configured for the UE. When the UE receives at least two pieces of configuration information, it can determine which configuration information is the third configuration information. In some other possible implementations, the third configuration information is configuration information determined by a protocol. That is, the UE can determine which configuration information is the third configuration information according to the communication protocol; and when the UE receives at least two pieces of configuration information, it can determine which configuration information is the third configuration information. In some possible implementations, the third configuration information is configuration information with a lowest priority.

In some possible implementations, the third configuration information is configuration information with a lowest priority among the downlink control information DCI carrying the channel access mode, the RRC dedicated signaling carrying the channel access mode, and the system information carrying the channel access mode.

In some possible implementations, the at least two pieces of configuration information include the system information and the RRC dedicated signaling. If the channel access mode carried in the system information is different from the channel access mode carried in the RRC dedicated signaling, the channel access mode carried in the system information is ignored.

In some possible implementations, the method also includes the following steps.

In step S803, the first configuration information in the at least two pieces of configuration information is determined based on configuration information other than the third configuration information in the at least two pieces of configuration information.

In step S804, it is determined that a channel access mode of the user equipment is a channel access mode carried in the first configuration information.

An embodiment of the present disclosure provides a method for determining a channel access mode, which is performed by a network device, and the method includes:
sending at least two pieces of configuration information carrying channel access modes to a user equipment; in which the at least two pieces of configuration information include a DCI, and at least one of configuration information other than the DCI in the at least two pieces of configuration information carries a third type of channel access mode (or called No-LBT), and the DCI carries a third type of channel access mode.
   and/or;
sending at least two pieces of configuration information carrying channel access modes to a user equipment; in which the at least two pieces of configuration information include a DCI, and configuration information other than the DCI in the at least two pieces of configuration information does not carry the third type of channel access mode (or called No-LBT), and the DCI does not carry the third type of channel access mode.

It can be understood that if the network device does not configure the No-LBT mode for the UE (including using system information to configure the UE to use the No-LBT mode, or using an RRC UE-dedicated signaling to configure the UE to use the no-LBT method), the UE determines that the network equipment does not indicate the No-LBT mode in the DCI. That is, only when the network device is configured with the no-LBT mode, it can instruct the UE to use the No-LBT mode in the DCI.

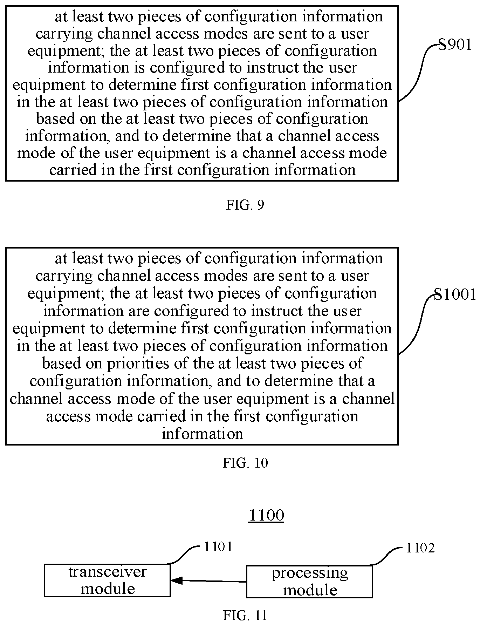

An embodiment of the present disclosure provides a method for determining a channel access mode, which is performed by a network device. FIG. 9 is a flowchart of a method for determining a channel access mode according to an exemplary embodiment. As shown in FIG. 9, the method includes the following step.

In step S901, at least two pieces of configuration information carrying channel access modes are sent to a user equipment; the at least two pieces of configuration information is configured to instruct the user equipment to determine first configuration information in the at least two pieces of configuration information based on the at least two pieces of configuration information, and to determine that a channel access mode of the user equipment is a channel access mode carried in the first configuration information.

An embodiment of the present disclosure provides a method for determining a channel access mode, which is performed by a network device. FIG. 10 is a flowchart of a method for determining a channel access mode according to an exemplary embodiment. As shown in FIG. 10, the method includes the following step.

In step S1001, at least two pieces of configuration information carrying channel access modes are sent to a user equipment; the at least two pieces of configuration information are configured to instruct the user equipment to determine first configuration information in the at least two pieces of configuration information based on priorities of the at least two pieces of configuration information, and to determine that a channel access mode of the user equipment is a channel access mode carried in the first configuration information.

An embodiment of the present disclosure provides a method for determining a channel access mode, which is performed by a network device, and the method includes:
sending at least two pieces of configuration information carrying channel access modes to a user equipment; the at least two pieces of configuration information are configured to instruct the user equipment to determine that configuration information with a highest priority in the at least two pieces of configuration information is the first configuration information, and to determine that a channel access mode of the user equipment is a channel access mode carried in the first configuration information;
   or,
sending at least two pieces of configuration information carrying channel access modes to a user equipment; the at least two pieces of configuration information are configured to instruct the user equipment to determine that a channel access mode of the user equipment is a channel access mode carried by configuration information with a highest priority in the at least two pieces of configuration information.

An embodiment of the present disclosure provides a method for determining a channel access mode, which is performed by a network device, and the method includes:
sending at least two pieces of configuration information carrying channel access modes to a user equipment; the at least two pieces of configuration information are configured to instruct the user equipment to determine, in response to the at least two pieces of configuration information including downlink control information (DCI) carrying a channel access mode, that the DCI is first configuration information, and to determine that a channel access mode of the user equipment is a channel access mode carried in the first configuration information;
   or,
sending at least two pieces of configuration information carrying channel access modes to a user equipment; the at least two pieces of configuration information include downlink control information (DCI) carrying a channel access mode, and are configured to instruct the user equipment to determine that the DCI is the first configuration information, and to determine that a channel access mode of the user equipment is a channel access mode carried in the first configuration information;
   or,
sending at least two pieces of configuration information carrying channel access modes to a user equipment; the at least two pieces of configuration information include downlink control information (DCI) carrying a channel access mode, and are configured to instruct the user equipment to determine that a channel access mode of the user equipment is a channel access mode carried in the DCI.

An embodiment of the present disclosure provides a method for determining a channel access mode, which is performed by a network device, and the method includes:
sending at least two pieces of configuration information carrying channel access modes to a user equipment; the at least two pieces of configuration information are configured to instruct the user equipment to determine that second configuration information is first configuration information in response to the at least two pieces of configuration information including the second configuration information, and to determine that a channel access mode of the user equipment is a channel access mode carried in the first configuration information;
   or,
sending at least two pieces of configuration information carrying channel access modes to a user equipment; the at least two pieces of configuration information are configured to instruct the user equipment to determine, in response to the at least two pieces of configuration information including second configuration information, that a channel access mode of the user equipment is a channel access mode carried in the second configuration information.

In some possible implementations, the second configuration information is configuration information with a highest priority.

In some possible implementations, DCI carries a channel access mode.

An embodiment of the present disclosure provides a method for determining a channel access mode, which is performed by a network device, and the method includes:
sending at least two pieces of configuration information carrying channel access modes to a user equipment; the at least two pieces of configuration information are configured to instruct the user equipment to determine first configuration information in the at least two pieces of configuration information based on configuration information other than third configuration information in the at least two pieces of configuration information, in response to the at least two pieces of configuration information including the third configuration information carrying a channel access mode different from a channel access mode carried by at least one piece of other configuration information, and to determine that a channel access mode of the user equipment is a channel access mode carried in the first configuration information.

An embodiment of the present disclosure provides a method for determining a channel access mode, which is performed by a network device, and the method includes:
sending at least two pieces of configuration information carrying channel access modes to a user equipment; the at least two pieces of configuration information are configured to instruct the user equipment to ignore third configuration information, in response to the at least two pieces of configuration information including third configuration information carrying a channel access mode different from a channel access mode carried by at least one piece of other configuration information.

In some possible implementations, the at least two pieces of configuration information include system information and an RRC dedicated signaling. If a channel access mode carried in the system information is different from a channel access mode carried in the RRC dedicated signaling, the channel access mode carried in the system information is ignored.

Based on the same idea as the above method embodiments, the embodiments of the present disclosure also provide a communication apparatus, which can have the functions of the user equipment 102 in the above method embodiments, and is configured to perform the steps performed by user equipment 102 provided by the above embodiments. The functions can be implemented by hardware, and can also be implemented by software or executing the corresponding software by the hardware. The hardware or software includes one or more modules corresponding to the above functions.

In a possible implementation, the communication apparatus 1100 shown in FIG. 11 may serve as the user equipment 102 involved in the above method embodiments, and performs the steps performed by the user equipment 102 in the above method embodiment.

The communication apparatus 1100 includes: a transceiver module 1101, configured to receive at least two pieces of configuration information carrying channel access modes from a network device; and
a processing module 1102, configured to determine first configuration information in the at least two pieces of configuration information based on the at least two pieces of configuration information; and determine that a channel access mode of the user equipment is a channel access mode carried in the first configuration information.

In a possible implementation, the processing module 1102 is further configured to determine first configuration information in the at least two pieces of configuration information based on priorities of the at least two pieces of configuration information.

In a possible implementation, the processing module 1102 is further configured to determine that configuration information with a highest priority in the at least two pieces of configuration information is the first configuration information.

In a possible implementation, the processing module 1102 is further configured to, in response to the at least two pieces of configuration information including second configuration information, determine that the second configuration information is the first configuration information.

In a possible implementation, the processing module 1102 is further configured to, in response to the at least two pieces of configuration information including downlink control information (DCI) carrying a channel access mode, determine that the DCI is the first configuration information.

In a possible implementation, the processing module 1102 is further configured to, in response to the at least two pieces of configuration information including third configuration information carrying a channel access mode different from a channel access mode carried by at least one piece of other configuration information, determine the first configuration information in the at least two pieces of configuration information based on configuration information other than the third configuration information in the at least two pieces of configuration information.

In a possible implementation, the third configuration information is configuration information with a lowest priority.

In a possible implementation, the third configuration information is system information carrying a channel access mode.

In a possible implementation, the processing module 1102 is further configured to, in a case that the at least two pieces of configuration information include system information and an RRC dedicated signaling and a channel access mode carried in the system information is different from a channel access mode carried in the RRC dedicated signaling, ignore the channel access mode carried in the system information.

In a possible implementation, the at least two pieces of configuration information include at least two of:
downlink control information (DCI) carrying a channel access mode,
an RRC dedicated signaling carrying a channel access mode, or
system information carrying a channel access mode.

In a possible implementation, the at least two pieces of configuration information include a DCI carrying a channel access mode and an RRC dedicated signaling carrying a channel access mode; and a priority of the DCI carrying the channel access mode is higher than a priority of the RRC dedicated signaling carrying the channel access mode.

In a possible implementation, the at least two pieces of configuration information include a DCI carrying a channel access mode and system information carrying a channel access mode; and a priority of the DCI carrying the channel access mode is higher than that of the system information carrying the channel access mode.

In a possible implementation, the at least two pieces of configuration information include an RRC dedicated signaling carrying a channel access mode and system information carrying a channel access mode.

A priority of the RRC dedicated signaling carrying the channel access mode is higher than that of the system information carrying the channel access mode.

In a possible implementation, the channel access mode includes at least one of:
a first type of channel access mode that performs N times of channel monitoring, N being an integer greater than zero,
a second type of channel access mode that only performs channel monitoring once, or
a third type of channel access mode without channel monitoring.

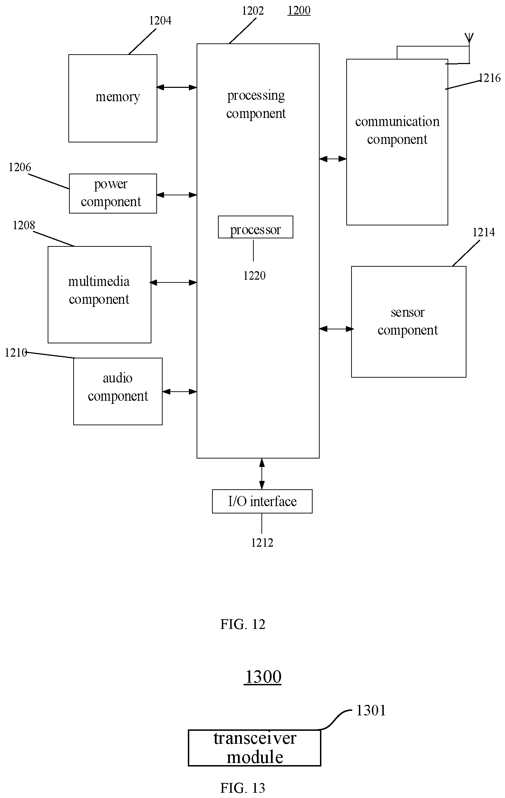

In a case that the communication apparatus is a user equipment, its structure may also be as shown in FIG. 12.

Referring to FIG. 12, an apparatus 1200 may include one or more of: a processing component 1202, a memory 1204, a power component 1206, a multimedia component 1208, an audio component 1210, an input/output (I/O) interface 1212, a sensor component 1214, and a communication component 1216.

The processing component 1202 generally controls the overall operations of the apparatus 1200, such as those associated with display, telephone calls, data communications, camera operations, and recording operations. The processing component 1202 may include one or more processors 1220 to execute instructions to complete all or part of the steps of the above method. Additionally, processing component 1202 may include one or more modules that facilitate interaction between processing component 1202 and other components. For example, processing component 1202 may include a multimedia module to facilitate interaction between multimedia component 1208 and processing component 1202.

The memory 1204 is configured to store various types of data to support operations at the apparatus 1200. Examples of such data include instructions for any application or method operating on apparatus 1200, contact data, phonebook data, messages, pictures, videos, and the like. The memory 1204 can be implemented by any type of volatile or non-volatile storage device or their combination, such as a static random access memory (SRAM), an electrically erasable programmable read-only memory (EEPROM), an erasable programmable read only memory (EPROM), a programmable read only memory (PROM), a read only memory (ROM), a magnetic memory, a flash memory, a magnetic or an optical disk.

The power component 1206 provides power to various components of the apparatus 1200. Power components 1206 may include a power management system, one or more power supplies, and other components associated with generating, managing, and distributing power for apparatus 1200.

The multimedia component 1208 includes a screen that provides an output interface between the apparatus 1200 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or swipe action, but also detect duration and pressure associated with the touch or swipe action. In some embodiments, the multimedia component 1208 includes a front camera and/or a rear camera. When the apparatus 1200 is in an operation mode, such as a shooting mode or a video mode, the front camera and/or the rear camera can receive external multimedia data. Each front camera and rear camera can be a fixed optical lens system or have focal length and optical zoom capability.

The audio component 1210 is configured to output and/or input audio signals. For example, the audio component 1210 includes a microphone (MIC), which is configured to receive external audio signals when the apparatus 1200 is in operation modes, such as call mode, recording mode and voice recognition mode. The received audio signals may be further stored in the memory 1204 or sent via the communication component 1216. In some embodiments, the audio component 1210 also includes a speaker for outputting audio signals.

The I/O interface 1212 provides an interface between the processing component 1202 and a peripheral interface module, which may be a keyboard, a click wheel, a button, and the like. These buttons may include, but are not limited to: a home button, volume buttons, start button, and lock button.

The sensor component 1214 includes one or more sensors for providing status assessments of various aspects of apparatus 1200. For example, the sensor component 1214 can detect the open/closed state of the apparatus 1200, the relative positioning of components, such as the display and keypad of the apparatus 1200, and the sensor component 1214 can also detect a change in the position of the apparatus 1200 or a component of the apparatus 1200, the presence or absence of user contact with the apparatus 1200, the apparatus 1200 orientation or acceleration/deceleration and the temperature change of the apparatus 1200. The sensor component 1214 may include a proximity sensor configured to detect the presence of nearby objects in the absence of any physical contact. The sensor component 1214 may also include an optical sensor, such as a CMOS or CCD image sensor, for use in imaging applications. In some embodiments, the sensor component 1214 may also include an acceleration sensor, a gyroscope sensor, a magnetic sensor, a pressure sensor or a temperature sensor.

The communication component 1216 is configured to facilitate wired or wireless communication between the apparatus 1200 and other devices. The apparatus 1200 can access wireless networks based on communication standards, such as Wi-Fi, 4G or 5G, or their combination. In one exemplary embodiment, the communication component 1216 receives broadcast signals or broadcast related information from an external broadcast management system via a broadcast channel. In an exemplary embodiment, the communication component 1216 also includes a near field communication (NFC) module to facilitate short-range communication. For example, the NFC module may be implemented based on radio frequency identification (RFID) technology, infrared data association (IrDA) technology, ultra wide band (UWB) technology, bluetooth (BT) technology and other technologies.

In an exemplary embodiment, apparatus 1200 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for performing the methods described above.

In an exemplary embodiment, there is also provided a non-transitory computer-readable storage medium including instructions, such as the memory 1204 including instructions. The above instructions can be executed by the processor 1220 of the apparatus 1200 to implement the above methods. For example, the non-transitory computer readable storage medium may be a ROM, a random access memory (RAM), a CD-ROM, a magnetic tape, a floppy disk, an optical data storage device, and the like.

Based on the same idea as the above method embodiment, the embodiments of the present disclosure also provide a communication apparatus, which can have the functions of the network device 101 in the above method embodiments, and is configured to performed the steps performed by the network device 101 provided by the above embodiment. The functions can be implemented by hardware, and can also be implemented by software or executing the corresponding software by the hardware. The hardware or the software includes one or more modules corresponding to the above functions.

In a possible implementation, the communication apparatus 1300 shown in FIG. 13 may serve as the network device 101 involved in the above method embodiments, and perform the steps performed by the network device 101 in the above method embodiment.

The communication apparatus 1300 shown in FIG. 13 includes a transceiver module 1302 for performing the steps performed by the network device 101 in the above method embodiments.

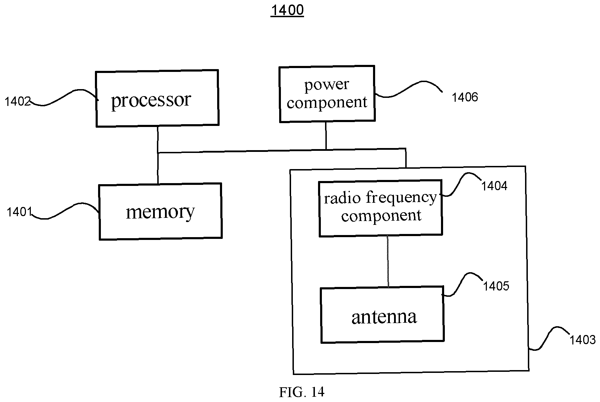

In a case that the communication apparatus is a network device, its structure may also be as shown in FIG. 14. The structure of the communication apparatus is described by taking the network device 101 as a base station as an example. As shown in FIG. 14, an apparatus 1400 includes a memory 1401, a processor 1402, a transceiver component 1403, and a power component 1406. The memory 1401 is coupled with the processor 1402 and may be configured to store programs and data necessary for the communication apparatus 1400 to realize various functions. The processor 1402 is configured to support the communication apparatus 1400 to execute corresponding functions in the above method, and the functions can be realized by invoking the programs stored in the memory 1401. The transceiver component 1403 may be a wireless transceiver, and may be configured to support the communication apparatus 1400 to receive a signaling and/or data and send a signaling and/or data through a wireless air interface. The transceiver component 1403 may also be called a transceiver unit or a communication unit, and the transceiver component 1403 may include a radio frequency component 1404 and one or more antennas 1405, in which the radio frequency component 1404 may be a remote radio unit (RRU), which may be specifically used for transmission of radio frequency signals and conversion of radio frequency signals and baseband signals, and the one or more antennas 1405 may be specifically used for radiating and receiving radio frequency signals.

In a case that the communication apparatus 1400 needs to send data, the processor 1402 can perform baseband processing on the data to be sent, and output the baseband signal to the radio frequency unit, and the radio frequency unit performs radio frequency processing on the baseband signal, and sends the radio frequency signal through an antenna in the form of electromagnetic waves. When data is sent to the communication apparatus 1400, the radio frequency unit receives the radio frequency signal through an antenna, converts the radio frequency signal into a baseband signal, and outputs the baseband signal to the processor 1402, and the processor 1402 converts the baseband signal into data and processes the data.

Other implementations of the embodiments of the present disclosure will be readily apparent to those skilled in the art from consideration of the specification and practice of the invention disclosed herein. This application is intended to cover any modification, use or adaptation of the embodiments of the present disclosure, which follow the general principles of the embodiments of the present disclosure and include common knowledge in the technical field not disclosed in the present disclosure or customary technical means. The specification and examples are considered exemplary only, with a true scope and spirit of the embodiments of the present disclosure being indicated by the following claims.

It should be understood that the embodiments of the present disclosure are not limited to the precise structures that have been described above and shown in the accompanying drawings, and various modifications and changes may be made without departing from the scope thereof. The scope of the embodiments of the present disclosure is limited only by the appended claims.

### Industrial Applicability

When the user equipment receives the multiple pieces of configuration information carrying channel access modes, it selects a piece of configuration information among the multiple pieces of configuration information based on the multiple pieces of configuration information, and determines that the channel access mode of the user equipment is the channel access mode carried in the selected configuration information, so that when the user equipment receives the multiple channel access modes indicated by the network device, it can determine the reasonable channel access mode, and use the reasonable channel access mode for channel access, which saves the power consumption of the user equipment on the basis of ensuring saving and improving communication efficiency.

## Claims

1. A method for determining a channel access mode, performed by a user equipment, comprising:
receiving at least two pieces of configuration information carrying channel access modes from a network device;
determining first configuration information in the at least two pieces of configuration information based on the at least two pieces of configuration information; and
determining that a channel access mode of the user equipment is a channel access mode carried in the first configuration information.

2. The method according to claim 1, wherein,
determining the first configuration information in the at least two pieces of configuration information based on the at least two pieces of configuration information comprises:
determining the first configuration information in the at least two pieces of configuration information based on priorities of the at least two pieces of configuration information.

3. The method according to claim 2, wherein,
determining the first configuration information in the at least two pieces of configuration information based on the priorities of the at least two pieces of configuration information comprises:
determining that configuration information with a highest priority in the at least two pieces of configuration information is the first configuration information.

4. The method according to claim 1, wherein,
determining the first configuration information in the at least two pieces of configuration information based on the at least two pieces of configuration information comprises:
in response to the at least two pieces of configuration information comprising second configuration information, determining that the second configuration information is the first configuration information.

5. The method according to claim 1, wherein,
determining the first configuration information in the at least two pieces of configuration information based on the at least two pieces of configuration information comprises:
in response to the at least two pieces of configuration information comprising downlink control information (DCI) carrying a channel access mode, determining that the DCI is the first configuration information.

6. The method according to claim 1, wherein,
determining the first configuration information in the at least two pieces of configuration information based on the at least two pieces of configuration information comprises:
in response to the at least two pieces of configuration information comprising third configuration information carrying a channel access mode different from a channel access mode carried by at least one piece of other configuration information, determining the first configuration information in the at least two pieces of configuration information based on configuration information other than the third configuration information in the at least two pieces of configuration information.

7. The method according to claim 6, wherein,
the third configuration information is configuration information with a lowest priority.

8. The method according to claim 6 or 7, wherein,
the third configuration information is system information carrying a channel access mode.

9. The method according to claim 1, further comprising:
wherein the at least two pieces of configuration information comprise system information and an RRC dedicated signaling, and in a case that a channel access mode carried in the system information is different from a channel access mode carried in the RRC dedicated signaling, ignoring the channel access mode carried in the system information.

10. The method according to claim 1, wherein,
the at least two pieces of configuration information comprise at least two of:
downlink control information (DCI) carrying a channel access mode,
an RRC dedicated signaling carrying a channel access mode, or
system information carrying a channel access mode.

11. The method according to claim 2, wherein,
the at least two pieces of configuration information comprise a DCI carrying a channel access mode and an RRC dedicated signaling carrying a channel access mode; and
a priority of the DCI carrying the channel access mode is higher than a priority of the RRC dedicated signaling carrying the channel access mode.

12. The method according to claim 2, wherein,
the at least two pieces of configuration information comprise a DCI carrying a channel access mode and system information carrying a channel access mode; and
a priority of the DCI carrying the channel access mode is higher than that of the system information carrying the channel access mode.

13. The method according to claim 2 or 11, wherein,
the at least two pieces of configuration information comprise an RRC dedicated signaling carrying a channel access mode and system information carrying a channel access mode; and
a priority of the RRC dedicated signaling carrying the channel access mode is higher than that of the system information carrying the channel access mode.

14. The method according to any one of claims 1 to 13, wherein,
the channel access mode comprises at least one of:
a first type of channel access mode that performs N times of channel monitoring, N being an integer greater than zero,
a second type of channel access mode that performs channel monitoring once, or
a third type of channel access mode without channel monitoring.

15. A method for determining a channel access mode, performed by a network device, comprising:
sending at least two pieces of configuration information carrying channel access modes to a user equipment; the at least two pieces of configuration information being configured to instruct the user equipment to determine first configuration information in the at least two pieces of configuration information based on the at least two pieces of configuration information, and to determine that a channel access mode of the user equipment is a channel access mode carried in the first configuration information.

16. The method according to claim 15, wherein,
determining the first configuration information in the at least two pieces of configuration information based on the at least two pieces of configuration information comprises:
determining the first configuration information in the at least two pieces of configuration information based on priorities of the at least two pieces of configuration information.

17. The method according to claim 15, wherein,
determining the first configuration information in the at least two pieces of configuration information based on the at least two pieces of configuration information comprises:
in response to the at least two pieces of configuration information comprising downlink control information (DCI) carrying a channel access mode, determining that the DCI is the first configuration information.

18. The method according to claim 15, wherein,
determining the first configuration information in the at least two pieces of configuration information based on the at least two pieces of configuration information comprises:
in response to the at least two pieces of configuration information comprising second configuration information, determining that the second configuration information is the first configuration information.

19. The method according to claim 15, wherein,
determining the first configuration information in the at least two pieces of configuration information based on the at least two pieces of configuration information comprises:
in response to the at least two pieces of configuration information comprising third configuration information carrying a channel access mode different from a channel access mode carried by at least one piece of other configuration information, determining the first configuration information in the at least two pieces of configuration information based on configuration information other than the third configuration information in the at least two pieces of configuration information.

20. The method according to claim 15, wherein,
determining the first configuration information in the at least two pieces of configuration information based on the at least two pieces of configuration information comprises:
the at least two pieces of configuration information comprising system information and an RRC dedicated signaling, and in a case that a channel access mode carried in the system information is different from a channel access mode carried in the RRC dedicated signaling, ignoring the channel access mode carried in the system information.

21. A communication apparatus, provided in a user equipment, comprising:
a transceiver module, configured to receive at least two pieces of configuration information carrying channel access modes from a network device;
a processing module, configured to determine first configuration information in the at least two pieces of configuration information based on the at least two pieces of configuration information; and determine that a channel access mode of the user equipment is a channel access mode carried in the first configuration information.

22. A communication apparatus, provided in a network device, comprising:
a transceiver module, configured to send at least two pieces of configuration information carrying channel access modes to a user equipment; the at least two pieces of configuration information being configured to instruct the user equipment to determine first configuration information in the at least two pieces of configuration information based on the at least two pieces of configuration information, and to determine that a channel access mode of the user equipment is a channel access mode carried in the first configuration information.

23. A communication apparatus, provided in a user equipment, comprising:
a memory configured to store a computer program; and
a processor configured to execute the computer program, so as to implement the method according to any one of claims 1-14.

24. A communication apparatus, comprising a processor and a memory, wherein,
the memory is configured to store a computer program;
the processor is configured to execute the computer program to implement the method according to any one of claims 15-20.

25. A computer-readable storage medium having stored therein instructions that, when being invoked and executed on a computer, cause the computer to perform the method according to any one of claims 1-14.

26. A computer-readable storage medium having stored therein instructions that, when being invoked and executed on a computer, cause the computer to perform the method according to any one of claims 15-20.
